(19) Europäisches Patentamt / European Patent Office / Office européen des brevets

(11) **EP 4 563 632 A1**

(12) **EUROPEAN PATENT APPLICATION**
published in accordance with Art. 153(4) EPC

(43) Date of publication:
**04.06.2025 Bulletin 2025/23**

(21) Application number: **23846446.5**

(22) Date of filing: **24.07.2023**

(51) International Patent Classification (IPC):
**C08J 9/16** (2006.01)    **C08L 77/00** (2006.01)

(52) Cooperative Patent Classification (CPC):
**C08J 9/16; C08L 77/00**

(86) International application number:
**PCT/JP2023/026977**

(87) International publication number:
**WO 2024/024716 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.07.2022 JP 2022119017**

(71) Applicant: **JSP Corporation
Tokyo 100-0005 (JP)**

(72) Inventor: **YAMANAKA Ryo
Yokkaichi-shi, Mie 510-0881 (JP)**

(74) Representative: **Gille Hrabal
Partnerschaftsgesellschaft mbB
Patentanwälte
Brucknerstraße 20
40593 Düsseldorf (DE)**

(54) **POLYAMIDE RESIN FOAM PARTICLES**

(57) Polyamide-based resin expanded beads having a mixed resin of a polyamide-based resin A and a polyamide-based resin B as a base resin, in which the polyamide-based resin A is an aliphatic polyamide, the polyamide-based resin B is a xylylene group-containing polyamide-based resin, and a mass ratio between the polyamide-based resin A and the polyamide-based resin B (polyamide-based resin A:polyamide-based resin B) is 97:3 to 60:40.

[Fig. 1]

EP 4 563 632 A1

**Description**

Technical Field

The present invention relates to polyamide-based resin expanded beads.

Background Art

Polyamide-based resins have been known as plastics excellent in high heat resistance, excellent abrasion resistance, chemical resistance, and the like. An expanded molded body obtained by causing this polyamide-based resin to expand can be intended to be lightweight while retaining excellent properties such as heat resistance, abrasion resistance, and chemical resistance, so that they are expected to be used in a wider range of applications such as automobile parts and electrical products.

For example, Patent Literature 1 discloses a polyamide-based resin expanded molded body that contains a polyamide-based resin and has a crystallite size D of a specific value or more and a degree of crystallinity X within a specific range, when calculated based on a peak with the narrowest peak width in an X-ray diffraction profile, and describes that the polyamide-based resin expanded molded body excellent in heat resistance and sound insulation can be industrially provided.

Citation List

Patent Literature

PTL1: WO 2016/147582

Summary of Invention

Technical Problem

Polyamide-based resins have a high softening temperature, thereby having a likelihood of requiring a higher molding pressure than a polystyrene resin upon in-mold expanding. This leads to the problems such as a higher molding cost and longer molding cycle.

Patent Literature 1 does not investigate a molding cycle of a polyamide-based resin expanded molded body, leaving room for improvement in shortening the molding cycle of the polyamide-based resin expanded molded body.

An object to be solved by the present invention is to provide polyamide-based resin expanded beads capable of shortening a molding cycle upon in-mold molding.

Solution to Problem

The present inventors have found that polyamide-based resin expanded beads can solve the above-described problems.

Namely, the present invention is as follows:

<1> Polyamide-based resin expanded beads having a mixed resin of a polyamide-based resin A and a polyamide-based resin B as a base resin, wherein the polyamide-based resin A is an aliphatic polyamide, the polyamide-based resin B is a xylylene group-containing polyamide-based resin, and a mass ratio between the polyamide-based resin A and the polyamide-based resin B (polyamide-based resin A:polyamide-based resin B) is 97:3 to 60:40.

<2> The polyamide-based resin expanded beads according to <1>, wherein a melt flow rate of the polyamide-based resin B at 275°C under a load of 0.325 kg is 5 g/10 minutes or less.

<3> The polyamide-based resin expanded beads according to <1> or <2>, wherein the expanded beads comprise carbon black.

<4> The polyamide-based resin expanded beads according to any one of <1> to <3>, wherein a melting point (TmA) of the polyamide-based resin A is higher than 180°C and 250°C or lower.

<5> The polyamide-based resin expanded beads according to any one of <1> to <4>, wherein a difference (TmB - TmA) between a melting point (TmA) of the polyamide-based resin A and a melting point (TmB) of the polyamide-based resin B is 30°C or more and 100°C or less.

<6> The polyamide-based resin expanded beads according to any one of <1> to <5>, wherein an apparent density of the expanded beads is 10 kg/m$^3$ or more and 300 kg/m$^3$ or less.

<7> The polyamide-based resin expanded beads according to any one of <1> to <6>, wherein a closed cell ratio of the expanded beads is 70% or more.

<8> A polyamide-based resin expanded beads molded body obtained by in-mold molding the polyamide-based resin expanded beads according to any one of <1> to <7>.

Advantageous Effects of Invention

According to the present invention, it is possible to provide polyamide-based resin expanded beads capable of shortening a molding cycle upon in-mold molding.

Brief Description of the Drawing

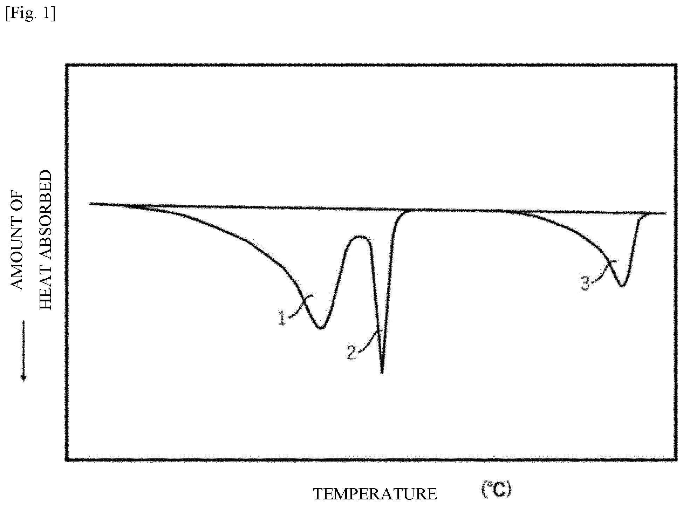

[Fig. 1] Fig. 1 is a view exemplifying a first DSC curve of polyamide-based resin expanded beads.

Description of Embodiment(s)

[Expanded beads]

The polyamide-based resin expanded beads of the present invention (hereinafter simply referred to as the "polyamide-based resin expanded beads" or "expanded beads") are polyamide-based resin expanded beads having a mixed resin of a polyamide-based resin A and a polyamide-based resin B as a base resin, wherein the polyamide-based resin A is an aliphatic polyamide, the polyamide-based resin B is a xylylene group-containing polyamide-based resin, and a mass ratio between the polyamide-based resin A and the polyamide-based resin B (polyamide-based resin A:polyamide-based resin B) is 97:3 to 60:40.

<Base resin>

(Polyamide-based resin A)

The polyamide-based resin A constituting a mixed resin that is a base resin of the polyamide-based resin expanded beads of the present invention is an aliphatic polyamide. Examples of the aliphatic polyamides include an aliphatic homopolyamide, an aliphatic polyamide copolymer, and a mixture thereof. The polyamide copolymer refers to a copolymer that has two or more types of repeating units, each of which at least partially has an amide bond.

Examples of the aliphatic homopolyamides include poly(6-aminohexanoic acid) (polycaproamide, nylon 6), also known as poly(caprolactam), poly(laurolactam) (nylon 12), poly(hexamethylene adipamide) (nylon 66), poly(7-aminoheptanoic acid) (nylon 7), poly(8-aminooctanoic acid) (nylon 8), poly(9-aminononanoic acid) (nylon 9), poly(10-aminodecanoic acid) (nylon 10), and poly(11-aminoundecanoic acid) (nylon 11), poly(hexamethylene sebacamide) (nylon 610), poly(decamethylene sebacamide) (nylon 1010), poly(hexamethylene azelamide) (nylon 69), poly(tetramethylene adipamide) (nylon 46), poly(tetramethylene sebacamide) (nylon 410), poly(pentamethylene adipamide) (nylon 56), poly(pentamethylene sebacamide) (nylon 510), and the like.

Examples of the aliphatic polyamide copolymers include, for example, a polycaproamide/polyhexamethylene adipamide copolymer (nylon 6/66), caprolactam/hexamethylene diamino adipic acid/lauryl lactam (nylon 6/66/12), and a caprolactam/lauryl lactam copolymer (nylon 6/12).

The polyamide-based resin A may be used singly or in combination of two or more thereof, or may be a mixture of the aliphatic homopolyamide and the aliphatic polyamide copolymer.

Among these, the polyamide-based resin A is preferably one or more selected from the group consisting of nylon 6, nylon 66, nylon 6/66, and nylon 6/66/12 and more preferably one or more selected from the group consisting of nylon 6/66 and nylon 6/66/12.

The polyamide copolymer may be a block copolymer in which a certain amount of amides with the same repeating unit are followed by a certain amount of amides of different types, or a random copolymer in which different types of amides are randomly repeated, but the polyamide copolymer is preferably the random copolymer. The polyamide copolymer being the random copolymer enables molding of the expanded beads at a relatively low molding pressure upon in-mold molding of the expanded beads.

The polyamide-based resin A is preferably an end-capped polyamide-based resin in which a functional group at its molecular chain end is capped. This reliably enables inhibition of hydrolysis in the course of production process of expanded beads, facilitates obtaining expanded beads capable of withstanding in-mold molding, and improves durability of a polyamide-based resin expanded beads molded body (hereinafter also simply referred to as "expanded beads molded body" or "molded body").

As an end capping agent for capping the above molecular chain end, for example, a carbodiimide compound, an oxazoline compound, an isocyanate compound, an epoxy compound, and the like, can be used.

Among these, the end capping agent is preferably a carbodiimide compound. Examples of the carbodiimide compounds include an aromatic monocarbodiimide such as bis(dipropylphenyl)carbodiimide (for example, "Stabaxol 1-LF" manufactured by Rhein Chemie Rheinau GmbH), aromatic polycarbodiimides (for example, "Stabaxol P", "Stabaxol P100," "Stabaxol P400" manufactured by Rhein Chemie Rheinau GmbH and the like), and an aliphatic polycarbodiimides such as poly(4,4'-dicyclohexylmethanecarbodiimide) (for example, "Carbodilite LA-1" manufactured by Nisshinbo Chemical Inc. and the like), etc. These end-capping agents may be used singly or in combination of two or more thereof.

The amount of end-capping agent compounded in the base resin is preferably 0.1% by mass or more and more preferably 0.5% by mass or more, and is preferably 5% by mass or less and more preferably 3% by mass or less. That is, the amount of the end-capping agent compounded in the base resin is preferably 0.1 to 5% by mass and more preferably 0.5 to 3% by mass.

Thus, the polyamide-based resin A is preferably a polyamide-based resin end-capped with one or more end-capping agents selected from the group consisting of a carbodiimide compound, an epoxy compound, and an isocyanate compound, more preferably a polyamide-based resin end-capped with a carbodiimide compound, and still more preferably a polyamide-based resin end-capped with an aromatic polycarbodiimide.

(Polyamide-based resin B)

The polyamide-based resin B is a xylylene-group-containing polyamide-based resin. The xylylene-group-containing polyamide resin is a polymer obtained by polycondensation of a diamine containing xylylene diamine and a dicarboxylic acid, and has a constituent unit derived from xylylene diamine and a constituent unit derived from dicarboxylic acid. The xylylene-group-containing polyamide resin preferably contains 50 mol% or more of a constitutional unit derived from xylylene diamine, of a constitutional unit derived from a diamine (diamine unit), more preferably 70 mol% or more, still more preferably 80 mol% or more, even still more preferably 90 mol% or more, and may contain 100 mol%.

The xylylene diamine preferably contains at least one of meta-xylylene diamine and para-xylylene diamine and more preferably contains meta-xylylene diamine.

The diamine unit constituting the xylylene group-containing polyamide resin preferably contains a constituent unit derived from the meta-xylylene diamine in an amount of 50 mol% or more thereof, more preferably 70 mol% or more, still more preferably 80 mol% or more, even still more preferably at 90 mol% or more, and it may contain 100 mol%.

The diamine unit in the xylylene group-containing polyamide resin may consist only of a constituent unit derived from xylylene diamine, but may also contain a constituent unit derived from a diamine other than xylylene diamine. Examples of the diamines other than xylylene diamine include aliphatic diamines having a linear chain or branched structure, such as ethylene diamine, tetramethylene diamine, pentamethylene diamine, 2-methylpentane diamine, hexamethylene diamine, heptamethylene diamine, octamethylene diamine, nonamethylene diamine, decamethylene diamine, dodecamethylene diamine, 2,2,4-trimethyl-hexamethylene diamine, and 2,4,4-trimethyl-hexamethylene diamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, and bis(aminomethyl)tricyclodecane; diamines having an aromatic ring such as bis(4-aminophenyl)ether, para-phenylenediamine, meta-phenylenediamine, and bis(aminomethyl)naphthalene, etc.

In the xylylene group-containing polyamide resin, examples of compounds capable of constituting a dicarboxylic acid unit include $\alpha, \omega$-linear aliphatic dicarboxylic acids having 4 or more and 20 or less carbon atoms, such as succinic acid, glutaric acid, adipic acid, pimelic acid, suberic acid, azelaic acid, sebacic acid, undecanedioic acid, and dodecanedioic acid; an alicyclic dicarboxylic acid such as 1,4-cyclohexanedicarboxylic acid; other aliphatic dicarboxylic acid such as dimer acid; aromatic dicarboxylic acids such as terephthalic acid, isophthalic acid, orthophthalic acid, xylylenedicarboxylic acid, and naphthalenedicarboxylic acid, etc.

Among these, the compound capable of constituting a dicarboxylic acid unit is preferably the $\alpha, \omega$-linear aliphatic dicarboxylic acid having 4 or more and 20 or less carbon atoms, more preferably one or more selected from the group consisting of adipic acid and sebacic acid, and still more preferably adipic acid.

The xylylene group-containing polyamide resin preferably contains 50 mol% or more of a constituent unit derived from adipic acid, of a constituent unit derived from a dicarboxylic acid (dicarboxylic acid unit), more preferably 70 mol % or more, still more preferably 80 mol % or more, even still more preferably 90 mol % or more, and may contain 100 mol %.

Namely, the polyamide-based resin B preferably has a constituent unit derived from a diamine containing 50 mol% or more of a constituent unit derived from meta-xylylenediamine and a constituent unit derived from a dicarboxylic acid containing 50 mol% or more of a constituent unit derived from adipic acid, more preferably has a constituent unit derived from a diamine containing 80 mol% or more of a constituent unit derived from meta-xylylenediamine and a constituent unit derived from a dicarboxylic acid containing 80 mol% or more of a constituent unit derived from adipic acid, and still more preferably has a constituent unit derived from a diamine containing 90 mol% or more of a constituent unit derived from meta-xylylenediamine and a constituent unit derived from a dicarboxylic acid containing 90 mol% or more of a constituent unit derived from adipic acid, and it may have a constituent unit derived from a diamine containing 100 mol% of a constituent unit derived from meta-xylylenediamine and a constituent unit derived from a dicarboxylic acid containing 100 mol% of a constituent unit derived from adipic acid.

As the remaining diamine unit excluding meta-xylylenediamine, a constituent unit derived from para-xylylenediamine is preferable.

As the remaining dicarboxylic acid unit excluding adipic acid, a constituent unit derived from an $\alpha$, $\omega$-linear aliphatic dicarboxylic acid having 4 or more and 20 or less carbon atoms is preferable.

In addition to the above-described diamines and dicarboxylic acids, as components constituting the xylylene group-containing polyamide resin, lactams such as $\epsilon$-caprolactam and laurolactam, aliphatic aminocarboxylic acids such as aminocaproic acid and aminoundecanoic acid; and an aromatic aminocarboxylic acid such as p-aminomethylbenzoic acid, can also be used as copolymerization components, provided that the effects of the present invention are not impaired.

<<Melt flow rate (MFR)>>

The melt flow rate (MFR) of the polyamide-based resin B at 275°C under a load of 0.325 kg is, from the viewpoint of shortening a molding cycle, preferably 10 g/10 minutes or less, more preferably 8 g/10 minutes or less, and still more preferably 5 g/10 minutes or less, and the lower limit thereof is not particularly limited, but is 0.1 g/10 minutes or more. The melt flow rate of the polyamide-based resin B is a value measured at a test temperature of 275°C under a nominal load of 0.325 kg according to JIS K7210-2:2014. It is to be noted that a measurement sample used has a moisture content of 1,000 mass ppm or less.

(Mass ratio between polyamide-based resin A and polyamide-based resin B)

A mass ratio between the polyamide-based resin A and the polyamide-based resin B in the base resin (polyamide-based resin A:polyamide-based resin B) is 97:3 to 60:40. From the viewpoint of shortening a molding cycle upon in-mold molding, a mass proportion of the polyamide-based resin B is preferably 5% by mass or more, more preferably 7% by mass or more, and still more preferably 10% by mass or more (with the proviso that the total of the content of polyamide-based resin A and the content of polyamide-based resin B in the base resin is 100% by mass). On the other hand, from the viewpoint of further inhibiting shrinkage of a molded body, a mass proportion of the polyamide-based resin A is preferably 70% by mass or more, more preferably 75% by mass or more, and still more preferably 80% by mass or more (provided that the total of the content of polyamide-based resin A and the content of polyamide-based resin B in the base resin is 100% by mass). That is, the mass ratio (polyamide-based resin A:polyamide-based resin B) is preferably 95:5 to 70:30, more preferably 93:7 to 75:25, and still more preferably 90:10 to 80:20.

(Melting point of polyamide-based resin A (TmA) and melting point of polyamide-based resin B (TmB))

The melting point of the polyamide-based resin A (TmA) and the melting point of the polyamide-based resin B (TmB) can be determined from the second DSC curve obtained under the following condition 1.

Condition 1

A DSC curve measured when expanded beads as a test piece is heated and melted from 30°C to a temperature 30°C higher than a temperature at the end of a melting peak at a heating rate of 10°C/min, is defined as a first DSC curve, and a DSC curve measured when the test piece is then kept at that temperature for 10 minutes, cooled to 30°C at a cooling rate of 10°C/min, and heated and melted again at a heating rate of 10°C/min to a temperature that is 30°C higher than a temperature at the end of the melting peak is defined as a second DSC curve, each curve measured based on the heat flux differential scanning calorimetry method of JIS K7121-1987. It is to be noted that the measurement sample used has a moisture content of 1,000 mass ppm or less.

In the second DSC curve, a melting peak (I) inherent to the polyamide-based resin A and a melting peak (III) inherent to the polyamide-based resin B at a higher temperature than the melting peak (I) appear. The temperature at the apex of the melting peak (I) in the second DSC curve corresponds to the melting point (TmA) of the polyamide-based resin A, which is a raw material for producing expanded beads, and the temperature at the apex of the melting peak (III) in the second DSC curve corresponds to the melting point (TmB) of the polyamide-based resin B, which is a raw material for producing expanded beads. The melting peak (I) and melting peak (III) appear in both the first DSC curve and second DSC curve. The temperatures at the apexes of the melting peak (I) and melting peak (III) may differ slightly between the first DSC curve and second DSC curve, but the difference is usually about 5°C or less.

(Difference (TmB - TmA))

The difference between the melting point (TmA) of the polyamide-based resin A and the melting point (TmB) of the polyamide-based resin B (TmB - TmA) in the base resin is preferably 20°C or more, more preferably 30°C or more, still more preferably 35°C or more, and even still more preferably 40°C or more, from the viewpoint of the secondary expandability and fusion splicing properties of expanded beads upon in-mold molding, and is preferably 100°C or less, more preferably 80°C or less, still more preferably 60°C or less, and even still more preferably 55°C or less. In other words, the difference (TmB - TmA) is preferably 20 to 100°C, more preferably 30 to 100°C, still more preferably 30 to 80°C, even still more preferably 35 to 60°C, and particularly preferably 40 to 55°C. The difference between the melting point (TmA) of the polyamide-based resin A and the melting point (TmB) of the polyamide-based resin B (TmB - TmA) is determined from a difference between the melting point (TmA) of the polyamide-based resin A and the melting point (TmB) of the polyamide-based resin B in the second DSC curve using expanded beads as a test piece.

<<Melting point (TmA)>>

From the viewpoint of improving heat resistance of the polyamide-based resin expanded beads molded body obtained by fusing the polyamide-based resin expanded beads of the present invention to each other, the melting point (TmA) of the polyamide-based resin A is preferably 150°C or higher, more preferably 160°C or higher, still more preferably 170°C or higher, and even still more preferably higher than 180°C, and from the viewpoint of improving fusion splicing properties of the expanded beads and making the molded body lightweight, it is preferably 250°C or lower, more preferably 230°C or lower, still more preferably 210°C or lower, even still more preferably 200°C or lower, and even still more preferably 190°C or lower. That is, TmA is preferably 150 to 250°C, more preferably 160 to 230°C, still more preferably 170 to 210°C, and even still more preferably higher than 180°C and 190°C or lower.

<<Melting point (TmB)>>

From the viewpoint of improving heat resistance of a molded body, the melting point (TmB) of the polyamide-based resin B is preferably 200°C or higher, more preferably 210°C or higher, still more preferably 220°C or higher, and even still more preferably 230°C or higher, and from the viewpoint of improving the fusion splicing properties of the expanded beads, it is preferably 270°C or lower, more preferably 260°C or lower, still more preferably 250°C or lower, and even still more preferably 240°C or lower. That is, TmB is preferably 200 to 270°C, more preferably 210 to 260°C, even more preferably 220 to 250°C, and even more preferably 230 to 240°C.

Under the above condition 1, in the first DSC curve using expanded beads as a test piece, there may be present the melting peak (II) which appears on the higher temperature side than the melting peak (I) inherent to the polyamide-based resin A, and results from secondary crystallization of the polyamide-based resin formed by the thermal history until causing resin beads to expand to obtain expanded beads. The melting peak (II) used herein is referred to as the high-temperature peak. Two or more high-temperature peaks (melting peaks (II)) may be present. Also, the high-temperature peak (melting peak (II)) is not observed in the second DSC curve. The temperature at the apex of the high-temperature peak (melting peak (II)) appears on the higher temperature side than that of the melting peak (I) in the first DSC curve using expanded beads as a test piece. Also, depending on a difference between the temperature at the apex of the melting peak inherent to the polyamide-based resin A and the temperature at the apex of the melting peak inherent to polyamide-based resin B as well, the temperature at the apex of the high-temperature peak (melting peak (II)) is preferably present between the melting peak (I) and the melting peak (III) in the first DSC curve. That is, in the first DSC curve obtained under the above condition 1, it is preferable that the melting peak (I), the melting peak (II), and the melting peak (III) are present in this order from the lower temperature side. The high-temperature peak appears on the higher temperature side than the melting peak (I) inherent to the polyamide-based resin A. Therefore, it is considered that a crystal with the high-temperature peak hardly melts upon in-mold molding than a crystal with the melting peak (I) inherent to the polyamide-based resin A, and the crystal is likely to remain. It is also considered that the polyamide-based resin A having a high-temperature peak in addition to containing the polyamide-based resin B, facilitates inhibition of excessive secondary expanding, and also inhibits the maximum surface pressure of expanded beads against a mold from being excessively high, resulting in that when the polyamide-based resin A has a high-temperature peak, a surface pressure is quickly decreased upon water cooling, and a water cooling time is further shortened.

A difference between the temperature at the apex of the melting peak (I) and the temperature at the apex of the high-temperature peak is preferably 10°C or more, more preferably 12°C or more, and still more preferably 15°C or more. The difference between the temperature at the apex of the melting peak (I) and the temperature at the apex of the high-temperature peak is, on the other hand, preferably 40°C or less, more preferably 30°C or less, and still more preferably 25°C or less. Namely, the difference between the temperature at the apex of the melting peak (I) and the temperature at the apex of the high-temperature peak is preferably 10 to 40°C, more preferably 12 to 30°C, and still more preferably 15 to 25°C. Incidentally, when a difference in temperature between the apex of the melting peak (I) and the apex of the high-temperature peak is compared and two or more high-temperature peaks appear in the first DSC curve, the temperature at the apex of the high-temperature peak on the lowest temperature side is compared with the temperature at the apex of the melting peak (I).

In the first DSC curve, the enthalpy of fusion of the melting peak (I) inherent to the polyamide-based resin A is preferably 25 J/g or more and more preferably 30 J/g or more. The enthalpy of fusion of the melting peak (I) inherent to the polyamide-based resin A is preferably 60 J/g or less and more preferably 50 J/g or less. That is, in the first DSC curve, the enthalpy of fusion of the melting peak (I) inherent to the polyamide-based resin A is preferably 25 to 60 J/g and more preferably 30 to 50 J/g. In the first DSC curve, the enthalpy of fusion of the melting peak (III) inherent to the polyamide-based resin B is preferably 3 J/g or more and more preferably 4 J/g or more. The enthalpy of fusion of the melting peak (III) inherent to the polyamide-based resin B is preferably 15 J/g or less and more preferably 10 J/g or less. Namely, in the first DSC curve, the enthalpy of fusion of the melting peak (III) inherent to the polyamide-based resin B is preferably 3 to 15 J/g and more preferably 4 to 10 J/g. In the first DSC curve, the enthalpy of fusion of the high-temperature peak (melting peak (II)) is preferably 1 J/g or more and more preferably 2 J/g or more. The enthalpy of fusion of the high-temperature peak (melting peak (II)) is preferably 13 J/g or less and more preferably 10 J/g or less. That is, in the first DSC curve, the enthalpy of fusion of the high-temperature peak (melting peak (II)) is preferably 1 to 13 J/g and more preferably 2 to 10 J/g. Herein, the temperature at the apex of each melting peak and enthalpy of fusion thereof can be determined as follows.

The temperature at the apex of each melting peak can be obtained from a melting peak obtained in the first DSC curve obtained under the above-described condition 1 where a temperature is raised from 30°C to a temperature 30°C higher than a temperature at the end of a melting peak at a heating rate of 10°C/min by heat flux differential scanning calorimetry. The enthalpy of fusion of each melting peak can be obtained based on a DSC curve obtained by the following condition 2. It is to be noted that a high-sensitivity differential scanning calorimeter "EXSTAR DSC7020" (manufactured by SII Nano Technology Inc.) can be used as a measuring apparatus.

Condition 2

Expanded beads as a test piece are heated and melted at a heating rate of 10°C/min from 30°C to a temperature 30°C higher than a temperature at the end of the melting peak based on the heat flux differential scanning calorimetry method of JIS K7122-1987 to obtain the first DSC curve.

A specific example will be described as follows using Fig. 1 (first DSC curve). For example, in the first DSC curve shown in Fig. 1, three melting peaks are present, which correspond to the melting peak (I) inherent to the polyamide-based resin A on the lowest temperature side, the second peak being the high-temperature peak (melting peak (II)), and the melting peak (III) inherent to the polyamide-based resin B on the highest temperature side, respectively. The temperature at the apex of each melting peak is a temperature at the point where the amount of heat absorbed is the largest for each peak.

The enthalpy of fusion at the apex of each melting peak corresponds to an area of each melting peak in the DSC curve shown in Fig. 1, and can be calculated as follows. A straight line (a baseline of the melting peak derived from the polyamide-based resin A) is drawn between the point at 120°C on the DSC curve and a point on the DSC curve indicating fusion end temperature of the melting peak (II). The melting peak (I) and melting peak (II) are each divided by a straight line perpendicular to temperature on the horizontal axis of the graph from the point on the DSC curve that corresponds to a valley between the melting peak (I) and melting peak (II) to the baseline of the melting peak derived from the polyamide-based resin A. An area 1 of the divided peak on the lower temperature side corresponds to the enthalpy of fusion of the melting peak (I) inherent to the polyamide-based resin A, and an area 2 of the divided peak on the higher temperature side corresponds to the enthalpy of fusion of the high-temperature peak (melting peak (II)) resulting from secondary crystallization of the polyamide-based resin formed by the thermal history until causing resin beads to expand to obtain expanded beads.

A straight line connecting a point on the DSC curve indicating fusion start temperature of the melting peak (III) and a point indicating fusion end temperature of the melting peak (III) inherent to the polyamide-based resin B is drawn (a baseline of the melting peak inherent to the polyamide-based resin B). An area 3 surrounded by the baseline of the melting peak derived from the polyamide-based resin B and the DSC curve, corresponds to the enthalpy of fusion of the melting peak (III) inherent to the polyamide-based resin B.

The base resin may contain other thermoplastic resins in addition to the polyamide-based resin A and polyamide-based resin B, as long as the purpose and effect of the present invention are not impaired. Examples of the other thermoplastic resins include a polyethylene resin, a polypropylene resin, a polystyrene resin, a vinyl acetate resin, a thermoplastic polyester resin, an acrylic ester resin, a methacrylic ester resin, a modified polyphenylene ether resin, a polycarbonate resin, a polyacetal resin, a polybutylene terephthalate resin, a polysulfone resin, a polyethersulfone resin, a polyamideimide resin, a polyetherimide resin, a polyetheretherketone resin, polyamide-based resins other than the polyamide-based resin A and polyamide-based resin B, etc.

The content of other thermoplastic resin in the base resin is preferably 10% by mass or less, more preferably 5% by mass or less, and still more preferably 3% by mass or less, from the viewpoint of obtaining expanded beads excellent in heat resistance, abrasion resistance, and chemical resistance. The base resin particularly preferably consists solely of the polyamide-based resin A and polyamide-based resin B.

(Heat stabilizer)

The expanded beads of the present invention can be compounded with a heat stabilizer depending on applications of a molded body. The heat stabilizer has an effect of inhibiting a resin from deteriorating due to heat when the expanded beads or expanded beads molded bodies are placed in a high temperature environment. The expanded beads are preferably compounded with the heat stabilizer.

When the expanded beads are compounded with the heat stabilizer, examples of the heat stabilizers include hindered amine-based compounds, hindered phenol-based compounds, phosphorus compounds, copper compounds, halides, and the like.

A specific example of the hindered amine-based compound includes bis(2,2,6,6,-tetramethyl-4-piperidyl)sebacate (trade name: Tinuvin 770, manufactured by BASF Japan Ltd.). A specific example of the hindered phenol-based compound includes N,N'-hexane-1,6-diylbis(3-(3,5-di-tert-butyl-4-hydroxyphenylpropionamide)) (trade name: Irganox 1098, manufactured by BASF Japan Ltd.). A specific example of the phosphorus compound includes tris(2,4-di-tert-butylphenyl)phosphite (trade name: Irgafos 168, manufactured by BASF Japan Ltd.). The copper compound excludes halides to be described later, and examples thereof include copper chloride, copper bromide, copper iodide, copper phosphate, copper stearate, as well as natural minerals such as hydrotalcite, stichtite, and pyrolite. Examples of the halides include ammonium iodide, stearyl triethylammonium bromide, benzyl triethylammonium iodide; alkali metal halide salts such as potassium chloride, sodium chloride, potassium bromide, potassium iodide, and sodium iodide, and the like.

Among these, from the viewpoint of imparting superior weather resistance to a molded body, the thermal stabilizer is preferably one or more selected from the group consisting of hindered amine-based compounds, hindered phenol-based compounds, phosphorus compounds, copper compounds, and halides, more preferably one or more selected from the group consisting of copper compounds and halides, still more preferably one or more selected from the group consisting of copper compounds and alkali metal halide salts, even still more preferably one or more selected from the group consisting of copper iodide and potassium iodide, and the thermal stabilizer even still more preferably contains copper iodide and potassium iodide.

The amount of the heat stabilizer in expanded beads is preferably 0.1% by mass or more and more preferably 0.2% by mass or more, and preferably 5% by mass or less and more preferably 3 parts by mass or less. That is, the amount of the heat stabilizer in the expanded beads is preferably 0.1 to 5% by mass and more preferably 0.2 to 3% by mass. Incidentally, when two or more of the heat stabilizers are contained, the total amount thereof preferably falls within the above range.

(Colorant)

The expanded beads of the present invention preferably contain a colorant. The colorant for use can be inorganic or organic pigments and dyes. The colorant is used to improve an appearance of the resulting molded body and enhance its design.

Examples of the inorganic pigments include titanium oxide, carbon black, titanium yellow, iron oxide, ultramarine blue, cobalt blue, a calcined pigment, a metallic pigment, mica, a pearl pigment, zinc oxide, precipitated silica, cadmium red, etc.

Examples of the organic pigments include monoazo-based pigments, condensed azo-based pigments, an anthraquinone pigment, an isoindolinone pigment, a perinone pigment, a quinacridone pigment, a perylene pigment, a thioindigo pigment, a dioxazine pigment, a phthalocyanine pigment, nitroso-based pigments, organic fluorescent pigments, and the like.

Examples of the dyes include, for example, an anthraquinone dye, a perinone dye, basic dyes, acid dyes, and mordant dyes.

Among these, the colorant is, from the viewpoint of weather resistance, preferably the organic pigments or the inorganic pigments and more preferably the inorganic pigments from the viewpoint of heat resistance and weather resistance, and still more preferably carbon black from the viewpoint of facilitating shortening of molding cycle.

When the expanded beads contain the colorant, the amount of colorant in the expanded beads is, from the viewpoint of imparting an excellent design to the resulting expanded beads molded body, preferably 0.5% by mass or more, more preferably 0.8% by mass or more, still more preferably 1% by mass or more, and preferably 10% by mass or less, more preferably 5% by mass or less, and still more preferably 3% by mass or less. Accordingly, the amount of the colorant in the expanded beads is preferably 0.5 to 10% by mass, more preferably 0.8 to 5% by mass, and still more preferably 1 to 3% by mass.

The expanded beads can be appropriately compounded with various additives such as an antistatic agent, a conductivity imparting agent, a lubricant, an ultraviolet absorber, a flame retardant, a metal deactivator, a crystal nucleating agent, and fillers, which are commonly used, if necessary. The amounts of these various additives to be added vary depending on the purpose of a molded body, but are preferably 25 parts by mass or less, more preferably 15 parts by mass or less, still more preferably 10 parts by mass or less, and even still more preferably 5 parts by mass or less, relative to 100 parts by mass of the expanded beads.

<Apparent density>

From the viewpoint of inhibiting shrinkage of molded body and resultantly obtaining a better molded body, the apparent density of the expanded beads is preferably 10 kg/m$^3$ or more, more preferably 30 kg/m$^3$ or more, still more preferably 50 kg/m$^3$ or more, even still more preferably 70 kg/m$^3$ or more, and preferably 300 kg/m$^3$ or less, more preferably 250 kg/m$^3$ or less, and still more preferably 200 kg/m$^3$ or less. That is, the apparent density of the expanded beads is preferably 10 to 300 kg/m$^3$, more preferably 30 to 300 kg/m$^3$, still more preferably 50 to 250 kg/m$^3$, and even still more preferably 70 to 200 kg/m$^3$.

The apparent density of the expanded beads is measured by the following method. A graduated cylinder containing water at a temperature of 23°C is prepared, and a mass W1 of approximately 500 cm$^3$ of expanded beads that have been left stand for two days under the conditions of 50% relative humidity, 23°C, and 1 atm, is measured. Next, the expanded beads are submerged in the graduated cylinder using a wire mesh. Taking into account a volume of the wire mesh, a volume V1 [cm$^3$] of the expanded beads is measured, which can be read from the amount of rise in a water level, and the mass W1 [g] of the expanded beads is divided by the volume V1 (W1/V1) and converted into units of [kg/m$^3$] to obtain the apparent density of the expanded beads.

<Average foam cell size>

The average foam cell size of the expanded beads is, from the viewpoint of facilitating obtaining of molded body excellent in surface properties, preferably 30 μm or more, more preferably 50 μm or more, still more preferably 70 μm or more, even still more preferably 90 μm or more, and is preferably 250 μm or less, more preferably 200 μm or less, still more preferably 170 μm or less, and even still more preferably 150 μm or less. Accordingly, the average foam cell size of the expanded beads is preferably 30 to 250 μm, more preferably 50 to 200 μm, still more preferably 70 to 170 μm, and even still more preferably 90 to 150 μm.

The average foam cell size of the expanded beads is measured by the following method. First, expanded beads are divided into approximately two portions so as to be passed through the center of the expanded beads, and the cut surface is photographed with a scanning electron microscope. Next, in the obtained cross-sectional photograph, straight lines are drawn at equal intervals in eight directions from the vicinity of the center of the cut surface of the expanded beads, and the number of cells that intersect with the straight lines is counted. The total length of straight lines is divided by the number of cells counted to obtain a foam cell size of the expanded beads. This operation is performed in the same manner for 10 or more expanded beads, and an arithmetic mean value of the foam cell sizes of each expanded beads is an average foam cell size of the expanded beads.

<Closed foam cell size>

A closed cell ratio of the expanded beads is, from the viewpoint of having a likelihood of obtaining a molded body excellent in fusion splicing properties and resiliency, preferably 70% or more, more preferably 80% or more, still more preferably 85% or more, and even still more preferably 90% or more.

The closed cell ratio of the expanded beads is the ratio of a volume of closed cells to a volume of all cells in expanded beads, and can be determined using an air comparison type specific gravity meter based on ASTM-D2856-70.

[Production method of expanded beads]

The method for producing the polyamide-based resin expanded beads of the present invention is a method that includes causing resin beads having a mixed resin of the polyamide-based resin A and the polyamide-based resin B as a base resin to expand to produce polyamide-based resin expanded beads.

<Resin beads having a mixed resin as a base resin and production method thereof>

The mass of one of the resin beads is appropriately set according to the size, apparent density, or the like of target expanded beads, but is preferably 0.5 mg or more and 15.0 mg or less. Within the above range thereof, the apparent density can be increased. From this viewpoint, the mass of the resin beads is more preferably 1.0 mg or more, still more preferably 1.5 mg or more, and more preferably 10.0 mg or less, still more preferably 7.0 mg or less, and even still more preferably 5.0 mg or less. Namely, the mass of the resin beads is more preferably 1.0 to 10.0 mg, still more preferably 1.5 to 7.0 mg, and even still more preferably 1.5 to 5.0 mg.

The melting point (Tm) of the resin beads is, from the viewpoint of obtaining expanded beads excellent in heat resistance, preferably 180°C or higher, more preferably 183°C or higher, and still more preferably 185°C or higher, and from the viewpoint of facilitating temperature control upon expanding, it is preferably 250°C or lower, more preferably 220°C or lower, and still more preferably 200°C or lower. That is, Tm is preferably 180 to 250°C, more preferably 183 to 220°C, and still more preferably 185 to 200°C. It is to be noted that the melting point of the resin beads refers to the melting point of a kneaded product obtained by having preliminarily kneaded the polyamide-based resin A and polyamide-based resin B in an extruder or the like. When a plurality of melting peaks appears in a DSC curve, the peak apex temperature of a melting peak having the largest area is adopted as the melting point.

The polyamide-based resin A and polyamide-based resin B are melt-kneaded using a general extruder to be able to obtain a melt-kneaded mixed resin of the polyamide-based resin A and polyamide-based resin B. As the extruder, either a single-screw or twin-screw extruder can be used. A method for producing the resin beads is not particularly limited, and the resin beads can be obtained by known methods. For example, the resin beads can be obtained by a strand cut method for feeding the polyamide-based resin A, the polyamide-based resin B, and an additive such as a colorant or a cell controlling agent, if necessary into an extruder, kneading them to form a melt-kneaded product, extruding the melt-kneaded product in the form of strands from small holes in a die attached to a tip of the extruder, cooling and solidifying the extruded molten product, and then cutting it to a predetermined mass with a pelletizer; a hot-cut method for extruding the melt-kneaded product into a gas phase followed by cutting it immediately; an underwater-cut method (UWC method) for extruding the melt-kneaded product into water followed by cutting it immediately, or the like.

(Example of production method for expanded beads)

The expanded beads of the present invention can be fabricated, for example, by a production method having the "expanding (foaming) step" of impregnating resin beads having the mixed resin as a base resin with a blowing agent to cause the resin beads having the mixed resin as a base resin, impregnated with the blowing agent to expand by heating, pressure change, volume change, or the like.

<<Blowing agent addition step>>

The blowing agent addition step is a step of adding a blowing agent into a sealed container. Preferably, in this step, the resin beads can also be impregnated with a blowing agent to produce expandable resin beads. The resin beads can be impregnated with the blowing agent in this step and in each step described later (dispersion step, temperature rise step, and holding step), to obtain expandable resin beads. Also, in the case of impregnation with the blowing agent in this step, it is preferable to disperse resin beads in an aqueous solvent in a pressurizable sealed container such as an autoclave, and impregnate the resin beads with the blowing agent. The aqueous solvent is preferably water. It is to be noted that from the viewpoint of sufficiently impregnating the resin beads with the blowing agent in a short time, it is preferable to impregnate the resin beads with the blowing agent by applying pressure and/or heat.

(Blowing agent)

In the method for producing the expanded beads of the present invention, a physical blowing agent is preferably used as the blowing agent. Examples of the physical blowing agents include organic physical blowing agents such as aliphatic hydrocarbons such as propane, butane, pentane, hexane, and heptane, alicyclic hydrocarbons such as cyclopentane and cyclohexane, halogenated hydrocarbons such as a hydrofluoroolefin, chlorofluoromethane, trifluoromethane, 1,1-difluoroethane, 1,1,1,2-tetrafluoroethane, methyl chloride, ethyl chloride, and methylene chloride, dialkyl ethers such as dimethyl ether, diethyl ether, and methyl ethyl ether, and the like. Also, examples of the inorganic physical blowing agents include carbon dioxide, nitrogen, helium, argon, air, etc.

Among physical blowing agents, the inorganic physical blowing agents are preferred from the viewpoints of having little impact on the environment and being non-flammable and excellent in safety, with carbon dioxide or nitrogen being more preferred, and carbon dioxide being still more preferred.

In order to sufficiently impregnate the resin beads with the blowing agent in a short time, the present step is also preferably carried out under pressure. From the viewpoint of sufficiently impregnating the resin beads with the blowing agent in a short time, the maximum pressure upon impregnation carried out under pressure (hereinafter also referred to as an impregnation pressure) is preferably applied so that by addition of blowing agent to the container containing a dispersion liquid, a pressure inside a sealed container is 1.5 MPa (G) or more, more preferably 2.5 MPa (G) or more, and preferably 7 MPa (G) or less and more preferably 5 MPa (G) or less. In other words, the pressure inside the sealed container to which the blowing agent has been added is preferably 1.5 to 7 MPa (G) and more preferably 2.5 to 5 MPa (G). Incidentally, the above "1.5 MPa (G)" refers to 1.5 MPa as a gauge pressure.

(Example of production method)

A method for producing the expanded beads of the present invention is not limited as long as the method has the above-described "blowing agent addition step" and "expanding (foaming) step," however, preferred are [1] a method for impregnating resin beads with a blowing agent, then removing the resin beads impregnated with the blowing agent without causing of the resin beads to expand, and thereafter heating them in an expanding apparatus to obtain expanded beads; and [2] a method for impregnating resin beads dispersed in a dispersion medium in a sealed apparatus with a blowing agent, and raising the resin beads impregnated therewith to a temperature in the vicinity of the softening temperature of the resin, and then releasing the resin beads together with the dispersion medium out of the apparatus under low pressure to obtain expanded beads, with the above-described method [2] being more preferred.

The preferred production method, which is the method [2] will be described below.

The method for producing expanded beads of the present invention preferably includes the following steps:

(1) A dispersion step of dispersing the resin beads having a mixed resin as a base resin in water in a sealed container to obtain a dispersion liquid;

(2) a temperature rise step of raising a temperature of the dispersion liquid;

(3) a holding step of holding the dispersion liquid at a temperature that is 90°C lower than the melting point (Tm) of the resin beads (Tm - 90°C) or higher and lower than a temperature that is 50°C lower than Tm (Tm - 50°C) for a holding time of 1 minute or more and 60 minutes or less; and

(4) an expanding step of setting a temperature (Te) of the dispersion liquid immediately before expanding to a temperature that is 90°C lower than the melting point (Tm) of the resin beads (Tm - 90°C) or higher and lower than a temperature that is 50°C lower than Tm (Tm - 50°C), and releasing the resin beads containing a blowing agent from the sealed container together with water under pressure lower than a pressure inside the sealed container to cause expanding.

The method for producing the expanded beads of the present invention may include a step other than the above steps, and other components may be added in the above steps.

<<Dispersion step>>

The dispersion step is a step of dispersing the resin beads in an aqueous solvent, preferably water, in a sealed container to obtain a dispersion liquid.

A method for dispersing the resin beads in water is not particularly limited, and any known method can be employed. For example, the dispersion liquid can be obtained by adding the resin beads to water while stirring the water using a stirrer, and further stirring it.

Also, a dispersant such as an inorganic substance such as aluminum oxide, tricalcium phosphate, magnesium pyrophosphate, zinc oxide, kaolin, mica, talc, or smectite, or a dispersion aid such as an anionic surfactant such as sodium dodecylbenzenesulfonate or sodium alkanesulfonate, is preferably added to the dispersion liquid, if necessary. A mass ratio of the resin beads to the dispersant (resin beads/dispersant) is preferably 20 or more and 2,000 or less, more preferably 30 or greater and 1,000 or less. Also, a mass ratio of the dispersant to the dispersion aid (dispersant/dispersion aid) is preferably 1 or more and 500 or less and more preferably 1 or more and 100 or less.

<<Temperature rise step>>

The temperature rise step is an arbitrary step in production of expanded beads. The temperature rise step may be employed before the blowing agent addition step, after the blowing agent addition step, or during the blowing agent addition step. In the present step, the dispersion liquid is preferably raised to an expanding temperature or a holding temperature to be described later. It is considered that water in the aqueous solvent is more likely absorbed by the polyamide-based resin in the course of the temperature rise step.

The temperature rise step includes the step of heating a dispersion liquid in which the resin beads are dispersed in water, from room temperature to a temperature of the holding step (hereinafter also referred to as the holding temperature).

A temperature after temperature rise is preferably 50°C or higher, more preferably 80°C or higher, and is preferably the melting point (Tm (°C)) of the resin beads or lower and more preferably (Tm - 20 (°C)) or lower. That is, the temperature after the temperature rise is preferably 50 to (Tm)°C and more preferably 80 to (Tm - 20)°C.

The dispersion step and the temperature rise step also serve to allow the resin beads to absorb water. From the viewpoint of allowing the resin beads to sufficiently absorb water and undergo plasticization, the total time of the step of obtaining a dispersion liquid and the step of impregnating them with a blowing agent is preferably 20 minutes or longer and more preferably 30 minutes or longer. From the viewpoint of productivity of expanded beads, on the other hand, the above-described time is preferably 60 minutes or shorter. That is, the above time is preferably 20 to 60 minutes and more preferably 30 to 60 minutes.

Also, the rate of temperature rise in the temperature rise step is, from the viewpoint of allowing the resin beads to sufficiently absorb water and undergo plasticization, preferably 10°C/min or less and more preferably 7°C/min or less. From the viewpoint of productivity of the expanded beads, on the other hand, the rate of temperature rise is preferably 1°C/min or more and more preferably 2°C/min or more. That is, the above-described rate of temperature rise is preferably 1 to 10°C/min and more preferably 2 to 7°C/min.

<<Holding step>>

The holding step is a step of holding a dispersion liquid preferably at a temperature that is 90°C lower than the melting point (Tm) of the resin beads (Tm - 90°C) or higher and lower than a temperature that is 50°C lower than the melting point (Tm) of the resin beads (Tm - 50°C) for a holding time of 1 minute or longer and 60 minutes or shorter.

The holding temperature of the dispersion liquid in the holding step is, from the viewpoint of allowing the polyamide-based resin to sufficiently absorb water and undergo plasticization and from the viewpoint of uniformly impregnating a mixed resin with a blowing agent, preferably a temperature that is 90°C lower than the melting point (Tm) of the resin beads (Tm - 90°C) or higher, more preferably a temperature that is 80°C lower than Tm (Tm - 80°C) or higher, still more preferably a temperature that is 70°C lower than Tm (Tm - 70°C) or higher, even still more preferably a temperature that is 65°C lower than Tm (Tm - 65°C) or higher, and preferably lower than a temperature that is 50°C lower than Tm (Tm - 50°C), more preferably a temperature that is 53°C lower than Tm (Tm - 53°C) or lower, and still more preferably a temperature that is 55°C lower than Tm (Tm - 55°C) or lower. That is, the holding temperature is preferably (Tm - 90)°C or higher and lower than (Tm - 50)°C, more preferably (Tm - 80) to (Tm - 53)°C, still more preferably (Tm - 70) to (Tm - 55)°C, and even still more preferably (Tm - 65) to (Tm - 55)°C.

Normally, when producing expanded beads using a general-purpose resin such as a polypropylene resin as a base resin, the temperature is held in the vicinity of the melting point of a raw material resin. However, in the method for producing the expanded beads of the present invention, the temperature is preferably held at a temperature that is 90°C lower than the melting point (Tm) of the resin beads (Tm - 90°C) or higher and lower than a temperature that is 50°C lower than Tm (Tm - 50°C). This is thought to be because the polyamide-based resin is hygroscopic, so that the resin beads is plasticized by water used as a dispersion liquid, and the melting point is significantly lowered, as a result of which, expanded beads having a desired apparent density and closed cell ratio can be produced at a temperature significantly lower than the melting point of the resin beads.

A holding time in the holding step is, from the viewpoint of homogeneously impregnating a mixed resin with a blowing agent and obtaining expanded beads having a high closed cell ratio, preferably 1 minute or longer, more preferably 5 minutes or longer, still more preferably 10 minutes or longer, and even still more preferably 13 minutes or longer. Also, from the viewpoint of productivity of the expanded beads and of preventing hydrolysis of the polyamide-based resin, the holding time in the holding step is preferably 60 minutes or shorter, more preferably 40 minutes or shorter, still more preferably 30 minutes or shorter, even still more preferably 20 minutes or shorter, and even still more preferably 18 minutes or shorter. That is, the holding time is preferably 1 to 60 minutes, more preferably 1 to 40 minutes, still more preferably 5 to 30 minutes, even still more preferably 10 to 20 minutes, and even still more preferably 13 to 18 minutes. Holding the mixed resin for the above-described time enables polyamide-based resin expanded beads having a low apparent density and a high closed cell ratio to be obtained. The holding step can be set in multiple stages within the above temperature range, wherein a temperature can also be slowly raised within the temperature range over a sufficient period of time. From the viewpoint of facilitation of production, the temperature is preferably set in one stage within the above range (the holding temperature is constant.) and held for the above-described time.

From the viewpoint of uniformly impregnating a mixed resin with a blowing agent, the holding step is preferably carried out under pressure, wherein the same pressure as an impregnation pressure is preferably maintained. A pressure inside a container containing a dispersion liquid is preferably 1.5 MPa (G) or more and more preferably 2.5 MPa (G) or more. Also, the pressure inside the container containing the dispersion liquid is preferably 7 MPa (G) or less and more preferably 5 MPa (G) or less. In other words, the pressure inside the container is preferably 1.5 to 7 MPa (G) and more preferably 2.5 to 5 MPa (G).

<<Expanding (foaming) step>>

The expanding (foaming) step is a step of causing expanding (foaming) of resin beads impregnated with a blowing agent. A method of causing expanding of the resin beads is not particularly limited, but is preferably a method that includes, following the holding step, releasing the resin beads impregnated with the blowing agent together with water into an atmosphere under pressure (usually atmospheric pressure) lower than that in the holding step to cause expanding.

A temperature Te of a dispersion liquid immediately before expanding (hereinafter also referred to as the expanding temperature) is, from the viewpoint of obtaining expanded beads having a low apparent density and high closed cell ratio, preferably a temperature that is 90°C lower than the melting point (Tm) of the resin beads (Tm - 90°C) or higher, more preferably a temperature that is 80°C lower than Tm (Tm -80°C) or higher, still more preferably a temperature that is 70°C lower than Tm (Tm - 70°C) or higher, and even still more preferably a temperature that is 65°C lower than Tm (Tm - 65°C) or higher. Also, the expanding temperature is preferably lower than a temperature that is 50°C lower than the melting point (Tm) of the resin beads (Tm - 50°C), more preferably a temperature that is 53°C lower than Tm (Tm - 53°C) or lower, and still more preferably a temperature that is 55°C lower than Tm (Tm - 55°C) or lower. That is, the expanding temperature is preferably (Tm - 90)°C or higher and lower than (Tm - 50)°C, more preferably (Tm - 80) to (Tm - 53)°C, still more preferably (Tm - 70) to (Tm - 55)°C, and even still more preferably (Tm - 65) to (Tm - 55)°C.

A pressure (expanding pressure) immediately before release in the expanding step is preferably 0.5 MPa (G) or more, more preferably 1.5 MPa (G) or more, and still more preferably 2.5 MPa (G) or more. The expanding pressure is also preferably 10 MPa (G) or less, more preferably 7 MPa (G) or less, and still more preferably 5 MPa (G) or less. That is, the expanding pressure is preferably 0.5 to 10 MPa (G), more preferably 1.5 to 7 MPa (G), and still more preferably 2.5 to 5 MPa (G).

[Expanded beads molded body]

The polyamide-based resin expanded beads molded body of the present invention is an expanded beads molded body in which the expanded beads have been fused together. That is, the expanded beads molded body of the present invention is an expanded beads molded body (expanded beads in-mold molded body) obtained by in-mold molding the expanded beads of the present invention.

The expanded beads of the present invention are excellent in their fusion splicing properties and resiliency and can inhibit molding shrinkage after molding, resulting in an expanded beads molded body in which the expanded beads molded body has been inhibited from shrinkage after molding and having its favorable appearance. The expanded beads molded body obtained by in-mold molding the expanded beads of the present invention, can inhibit molding shrinkage after molding, thereby suitably providing a thick molded body. A thickness of the expanded beads molded body is preferably 30 mm or more and more preferably 40 mm or more.

A method of in-mold molding can employ conventionally known methods, but is preferably a method that includes heating with steam. The polyamide-based resin in the expanded beads absorbs water and plasticizes with steam, making it possible to reduce a molding pressure. Incidentally, when the obtained molded body is dried and its moisture is removed, the original physical properties of the polyamide-based resin are restored, resulting in a molded body having high heat resistance.

The expanded beads of the present invention can be formed into an expanded beads molded body excellent in in-mold moldability. Specifically, a water cooling time can be shortened, resulting in shortening of the overall molding time, which is preferred.

The water cooling time for the expanded beads molded body can be determined as follows. First, the obtained expanded beads are filled into a mold and in-mold molded by steam heating to obtain a platy expanded beads molded body. The heating method includes supplying steam with drain valves on both sides of the mold open for five seconds to carry out preheating (exhaust step), then supplying steam from a mold on the moving side, subsequently supplying steam from a fixing-side mold, and then heating the mold to a molding heating steam pressure (molding pressure = molding steam pressure). After completion of heating, the pressure is released and the molded body is water-cooled until a surface pressure due to the expanding force of the molded body drops to 0.04 MPa (G), and the mold is then opened and the molded body is removed from the mold. The water-cooling time of the expanded beads molded body is a water-cooling time (seconds) required from the start of water-cooling until the surface pressure reaches 0.04 MPa (G). In the present invention, the reason for shortening of water-cooling time upon in-mold molding of the expanded beads is considered to be as follows. When the expanded beads are in-mold molded, the expanded beads undergo secondary expanding due to heating and pressure from steam, and then fuse to each other. In this case, the xylylene group-containing polyamide-based resin contained in a base resin at a specific ratio inhibits excessive secondary expanding and inhibits the maximum surface pressure from becoming excessively high. As a result, it is considered that the surface pressure decreases more quickly upon water-cooling, making it possible to shorten the water-cooling time.

<Molded body density>

The density of the expanded beads molded body (molded body density) is, from the viewpoint of obtaining a molded body excellent in its lightweightness, resiliency, and fusion splicing properties, preferably 10 kg/m$^3$ or more, more preferably 30 kg/m$^3$ or more, still more preferably 50 kg/m$^3$ or more, even still more preferably 60 kg/m$^3$ or more, and is preferably 350 kg/m$^3$ or less, more preferably 300 kg/m$^3$ or less, still more preferably 250 kg/m$^3$ or less, and even still more preferably 200 kg/m$^3$ or less. Namely, the above molded body density is preferably 10 to 350 kg/m$^3$, more preferably 30 to 300 kg/m$^3$, still more preferably 50 to 250 kg/m$^3$, and even still more preferably 60 to 200 kg/m$^3$.

The molded body density is measured by the following method. The expanded beads molded body is left stand for 2 days under conditions of relative humidity 50%, temperature 23°C, and 1 atm. Next, a container filled with water at 23°C is prepared, and an arbitrary amount of the expanded beads molded body (mass W [g]) is submerged in water in a container using a tool such as a wire net. A volume V [L] of the expanded beads molded body is measured, which can be read from the amount of rise in a water level, taking into account a volume of the tool such as the wire net. The mass W [g] of the expanded beads molded body placed in the container is divided by the volume V [L] (W/V) and converted into units of [kg/m$^3$] to determine the molded body density.

Examples

The present invention will be described in detail below with reference to Examples, but the present invention is not limited thereto.

The polyamide-based resins, resin beads, expanded beads, and molded bodies in Examples and Comparative Examples were measured and evaluated by the following methods.

[Measurement and evaluation]

<Resin beads>

(Melting point)

The melting point of polyamide-based resin beads was measured by heat flux differential scanning calorimetry based on JIS K7121-1987. Under the condition of a nitrogen inflow rate of 30 mL/min, the melting point was measured as the peak apex temperature of a melting peak of the second DSC curve obtained by heating and melting (first temperature rise) them from 30°C to a temperature 30°C higher than a temperature at the end of a melting peak at a heating rate of 10°C/min, and then holding the temperature for 10 minutes, followed by cooling to 30°C at a cooling rate of 10°C/min, and then heating and melting them again at a heating rate of 10°C/min to a temperature that was 30°C higher than the temperature at the end of the melting peak. It is to be noted that a measurement apparatus used was a high-sensitivity differential scanning calorimeter "EXSTAR DSC7020" (manufactured by SII Nano Technology Inc.). Also, the resin beads used as a test piece were placed in a desiccator under a nitrogen atmosphere so as to avoid high temperature and high humidity conditions and to prevent its hydrolysis, then evacuated under vacuum to reduce a moisture content to 1,000 ppm by mass or less, stored for 24 hours, and used for measurement of melting point. Incidentally, when a plurality of melting peaks appeared in the DSC curve, the peak apex temperature of a melting peak with the largest area was used as the melting point.

<Expanded beads>

(Melting point and enthalpy of fusion)

The expanded beads were used as a test piece, and a temperature at the apex of each melting peak and enthalpy of fusion thereof were obtained from a melting peak in the first DSC curve obtained upon raising the test piece from 30°C to a temperature 30°C higher than a temperature at the end of a melting peak at a heating rate of 10°C/min using heat flux differential scanning calorimetry. It is to be noted that a measurement apparatus used was a high-sensitivity differential scanning calorimeter "EXSTAR DSC7020" (manufactured by SII Nano Technology Inc.). An explanation will be made below using Fig. 1 (first DSC curve).

In the first DSC curve shown in Fig. 1, three melting peaks are present, which correspond to the melting peak (I) inherent to the polyamide-based resin A on the lowest temperature side, the second peak being the high-temperature peak (melting peak (II)), and the melting peak (III) inherent to the polyamide-based resin B on the highest temperature side, respectively. The temperature at the apex of each melting peak is a temperature at the point where the amount of heat absorbed is the largest for each peak. The enthalpy of fusion at the apex of each melting peak corresponds to an area of each melting peak in the DSC curve shown in Fig. 1, and was calculated as follows. First, a straight line connecting the point at 120°C on the DSC curve and a point on the DSC curve indicating fusion end temperature of the melting peak (II) was drawn (a baseline of the melting peak derived from the polyamide-based resin A). The melting peak (I) and melting peak (II) were each divided by a straight line perpendicular to temperature on the horizontal axis of the graph from the point on the DSC curve that corresponded to a valley between the melting peak (I) and melting peak (II) to the baseline of the melting peak derived from the polyamide-based resin A. An area 1 of the divided peak on the lower temperature side corresponds to the enthalpy of fusion of the melting peak (I) inherent to the polyamide-based resin A, and an area 2 of the divided peak on the higher temperature side corresponds to the enthalpy of fusion of the high-temperature peak (melting peak (II)) derived from the polyamide-based resin A. Next, a straight line connecting a point on the DSC curve indicating fusion start temperature of the melting peak (III) and a point indicating fusion end temperature of the melting peak (III) inherent to the polyamide-based resin B was drawn (a baseline of the melting peak inherent to the polyamide-based resin B). An area 3 surrounded by the baseline of the melting peak derived from the polyamide-based resin B and the DSC curve, corresponds to the enthalpy of fusion of the melting peak (III) inherent to the polyamide-based resin B.

(Apparent density)

The apparent density of the expanded beads was measured by the following method. A graduated cylinder containing water at a temperature of 23°C was prepared, and a mass W1 of approximately 500 $cm^3$ of expanded beads that had been left stand for two days under the conditions of 50% relative humidity, 23°C, and 1 atm, was measured. Next, the expanded beads were submerged in the graduated cylinder using a wire mesh. Taking into account a volume of the wire mesh, a volume V1 [$cm^3$] of the expanded beads was measured, which could be read from the amount of rise in a water level, and the mass W1 [g] of the expanded beads was divided by the volume V1 (W1/V1) and converted into units of [$kg/m^3$] to obtain the apparent density of the expanded beads.

<Average foam cell size>

The average foam cell size of the expanded beads was measured by the following method. First, expanded beads were divided into approximately two portions so as to be passed through the center of the expanded beads, and the cut surface was photographed with a scanning electron microscope. Next, in the obtained cross-sectional photograph, straight lines were drawn at equal intervals in eight directions from the vicinity of the center of the cut surface of the expanded beads, and the number of all cells that intersected with the straight lines was counted. The total length of straight lines intersected with the cells was divided by the number of cells counted to obtain a foam cell size of the expanded beads. This operation was performed in the same manner for 30 expanded beads, and an arithmetic mean value of the foam cell sizes of each expanded beads was an average foam cell size of the expanded beads.

(Closed cell ratio)

The closed foam cell size of the expanded beads was measured by the following method. According to the procedure C described in ASTM-D2856-70, a true volume Vx of the expanded beads (a sum of a volume of a resin constituting the expanded beads and the total volume of cells in closed cell portions in the expanded beads) was measured. For measurement of this true volume Vx, an air comparison-type specific gravity meter "930" manufactured by Beckman Toshiba, Ltd. was used. Next, the closed cell ratio was calculated by the following formula (1), and an arithmetic average value of the five measurement results was obtained.

$$\text{Closed cell ratio (\%)} = (Vx - W/\rho) \times 100/(Va - W/\rho) \ldots (1)$$

Vx: true volume of the expanded beads measured by the above method ($cm^3$)
Va: apparent volume of the expanded beads ($cm^3$)
W: mass of the sample for measuring the expanded beads (g)
$\rho$: density of the resin constituting the expanded beads ($g/cm^3$)

<Molded body>

(Molded body density)

The molded body density was measured by the following method. The expanded beads obtained in each Example and each Comparative Example were used to fabricate an expanded beads molded body by the method in <Fabrication of mixed resin expanded beads molded body> described later. The expanded beads molded body was left stand for 2 days under conditions of relative humidity 50%, temperature 23°C, and 1 atm. Next, a container filled with water at 23°C was prepared, and an arbitrary amount of the expanded beads molded body (mass W [g]) was submerged in water in a container using a tool such as a wire net. A volume V [L] of the expanded beads molded body was then measured, which could be read from the amount of rise in a water level, taking into account a volume of the tool such as the wire net. The mass W [g] of the expanded beads molded body placed in the container was divided by the volume V [L] (W/V) and converted into units of [kg/m$^3$] to determine the molded body density.

(Shrinkage rate)

The expanded beads obtained in each Example and each Comparative Example were used to fabricate an expanded beads molded body by the method in <Fabrication of mixed resin expanded beads molded body> described later. Thereafter, the expanded beads molded body was left stand for 24 hours in an environment of 23°C under 50% relative humidity, dimensions of the expanded beads molded body were then measured, and when the length, width, and thickness were designated as a', b', and c', respectively, and mold dimensions (internal dimensions) of a length, width, and thickness were designated as a, b, and c, respectively, a value denoted in the following formula was defined as a molding shrinkage rate (%) of the molded body. The less the molding shrinkage rate of the molded body, the more inhibited the molding shrinkage rate is, which is preferred.

$$\text{Molding shrinkage rate (\%)} = [(a - a')/a + (b - b')/b + (c - c')/c] \times 100/3$$

(Water cooling time)

Using the expanded beads obtained in each Example and Comparative Example, an expanded beads molded body was fabricated according to the method in <Fabrication of mixed resin expanded beads molded body> described later, and a time required from the start of water cooling until a surface pressure dropped to 0.04 MPa (G) was defined as the water cooling time (seconds).

(Molding cycle)

Using the expanded beads obtained in each Example and Comparative Example, an expanded beads molded body was fabricated according to the method in <Fabrication of mixed resin expanded beads molded body> described later, and a time required from the start of closing an open mold until a surface pressure due to expanding force of the molded body dropped to 0.04 MPa (G) and the molded body was released, was measured. The shorter the molding cycle time, the shorter the molding cycle, which is preferred.

(Fusion ratio)

The fusion ratio of an expanded beads molded body was measured by the following method. A cutter knife was used to make a cut in a thickness direction of one side of a surface of the expanded beads molded body obtained in each Example and Comparative Example at a position that divided a length of the test piece into two equal parts, with a depth of approximately 10 mm, and the molded body was bent and broken from the cut. The ratio (m/n × 100 [%]) of the number m of expanded beads present on the fracture surface that had undergone material destruction to the number n of all expanded beads present on the fracture surface was calculated. In a case in which the molded body could not be broken by bending it, the fusion ratio was regarded as 100%. The above measurement was made five times using different test pieces, and the material destruction rate for each was determined, and an arithmetic average of these was defined as the fusion ratio.

(Resiliency)

The resiliency of the expanded beads molded body was measured by the following method. Thicknesses of an end (10 mm inside from the end) and the center (portion dividing the molded body into two equal portions in both the vertical and horizontal directions) of the expanded beads molded body, corresponding to dimensions of a flat mold used for in-mold molding, were measured. Next, a thickness ratio of the expanded beads molded body (thickness of the center of molded body/thickness of the end of molded body × 100 (%)) was calculated and evaluated as follows. It is to be noted that the thickness measurement was performed on the expanded beads molded body fabricated by the method in <Fabrication of mixed resin expanded beads molded body> described later.

A: The thickness ratio is 95% or more.
B: The thickness ratio is less than 95% and is 90% or more.
C: The thickness ratio is less than 90%.

(Crystallite size)

The crystallite size of the expanded beads molded body was measured by the following method. The expanded beads molded body was used as a test piece, and X-ray diffraction (XRD) measurement was performed by a reflection method using an X-ray scattering apparatus "Smart Lab SE" (manufactured by Rigaku Corporation). As a detector, a one-dimensional semiconductor detector D/teX Ultra 250 was used. As a sample, an expanded beads molded body sliced to a thickness of approximately 1.0 mm, was used. Also, a standard material (lanthanum hexaboride) was measured to obtain b. Using software (product name: Igor Pro Version 6.3.2.3, manufactured by Wavemetrics, Inc.) assuming a Gaussian function as a peak shape, the one-dimensional X-ray diffraction profile obtained was separated into a diffraction peak derived from crystals and a diffraction peak derived from amorphous portions. Incidentally, the peak separation was performed by automatic fitting. Of the peaks obtained by peak separation, a full-width at half-maximum $\beta$ (rad) of each peak having the narrowest peak width was calculated, and according to the following formula (2), the full-width at half-maximum $\beta$ was used to calculate a crystallite size D of the expanded beads molded body. It is to be noted that $\lambda$ is a wavelength of X-rays, and $\theta$ is a Bragg angle (half a diffraction angle $2\theta$) at a peak position in the formula (2).
[Equation 1]

$$D = \frac{0.9\lambda}{\sqrt{\beta^2 - b^2}\cos\theta} \qquad (2)$$

[Fabrication of mixed resin beads, mixed resin expanded beads, and mixed resin expanded beads molded body]

The polyamide-based resins used to fabricate mixed resin beads and mixed resin expanded beads are shown in Table 1.

[Table 1]

Table 1

| Resin | Symbol | Manufacturer | Product name | Resin composition | Melting point (°C) | MFR (g/10 minutes) |
|---|---|---|---|---|---|---|
| Polyamide-based resin A | A1 | UBE Corporation | UBE Nylon 6434B | Polyamide 6/66/12 copolymer (Nylon 6/66/12) Polyamide 6/Polyamide 66/Polyamide 12 = 60/20/20 | 186 | |
| | A2 | UBE Corporation | UBE Nylon 5033B | Polyamide 6/66 copolymer (Nylon 6/66) Polyamide 6/Polyamide 66 = 85/15 | 197 | |

(continued)

| Resin | Symbol | Manufacturer | Product name | Resin composition | Melting point (°C) | MFR (g/10 minutes) |
|---|---|---|---|---|---|---|
| Polyamide -based re- sin B | B1 | Mitsubishi Gas Chemical Company, Inc. | MX Nylon S6007 | Polyamide-based resin synthesized from meta-xylylenediamine and adipic acid (polymeta-xylylene adipamide) | 236 | 2.0 |
| | B2 | Mitsubishi Gas Chemical Company, Inc. | MX Nylon S6001 | Polyamide-based resin synthesized from meta-xylylenediamine and adipic acid (polymeta-xylylene adipamide) | 236 | 7.0 |
| | B3 | Mitsubishi Gas Chemical Company, Inc. | MX Nylon S6121 | Polyamide-based resin synthesized from meta-xylylenediamine and adipic acid (polymeta-xylylene adipamide) | 236 | 0.5 |
| | B4 | UBE Corporation | UBE Nylon 1030B | Polyamide 6 | 220 | |
| | B5 | Solvay Japan, Ltd. | Amodel A-6000 | Polyamide 6T | 310 | |

Examples 1, 2, 4 to 9 and Comparative Examples 2, 4 to 7

<Fabrication of mixed resin beads>

The polyamide-based resins shown in Tables 2 to 4 as the polyamide-based resin A and polyamide-based resin B were fed to an extruder at the compounding ratios shown in Tables 2 to 4, and talc as a cell controlling agent "Talc Powder PK-S" (manufactured by Hayashi-Kasei Co., Ltd.) was fed in its amount as shown in Tables 2 to 4, 1.0% by mass of an aromatic polycarbodiimide "Stabaxol P" (manufactured by Rhein Chemie Rheinau GmbH) as an end-capping agent, 0.05% by mass of copper iodide and 0.2% by mass potassium iodide as heat stabilizers, and carbon black as a colorant in its amount as shown in Tables 2 to 4, were fed thereto, respectively, and the mixture was melt-kneaded to obtain a melt- kneaded product. The melt-kneaded product was then extruded as strands having a circular cross section from small holes of a die attached to a tip of the extruder, and the extruded strands were cooled with water, then cut into pellets having an average mass of 2 mg per pellet using a pelletizer, and dried to obtain mixed resin beads in pellet form. The melting points of the resin beads are shown in Tables 2 to 4.

<Fabrication of mixed resin expanded beads>

A 5-liter autoclave equipped with a stirrer was charged with 500 g of the obtained mixed resin beads and 3.5 liters of water as a dispersion medium, and added with 0.3 parts by mass of kaolin as a dispersant and 0.004 parts by mass of sodium alkylbenzene sulfonate as a surfactant, relative to 100 parts by mass of the mixed resin beads. While stirring the contents in the autoclave and raising them from room temperature (23°C) to a holding temperature (melting point of the resin beads - 55°C), carbon dioxide as a blowing agent was introduced under pressure into the autoclave until the pressure inside the autoclave reached an impregnation pressure (4.0 MPa (G)). In this case, the time of temperature rise from room temperature (23°C) to the holding temperature (melting point of the resin beads - 55°C) was 40 minutes. Next, the holding temperature (melting point of the resin beads - 55°C) was held at 4.0 MPa (G) for 15 minutes.

Thereafter, the mixed resin beads impregnated with a blowing agent were then released together with the dispersion medium under atmospheric pressure (0.1 MPa). An expanding temperature (temperature of the dispersion liquid immediately before expanding) was (melting point of the resin beads - 55)°C. The resulting mixed resin expanded beads were stored in an oven at 60°C for 24 hours and then slowly cooled to obtain mixed resin expanded beads. The above measurements were made on the resulting mixed resin expanded beads. The results are shown in Tables 2 to 4.

<Water impregnation and internal pressure application>

The mixed resin expanded beads were used and fed together with water in a plastic bag, which was then closed and shook well to thoroughly mix and impregnate the expanded beads with water. Thereafter, a 3-liter pressure-resistant container set at a pressurizing temperature of 40°C, was charged with 180 g of the mixed resin expanded beads impregnated with water. The pressure-resistant container was charged with the mixed resin expanded beads and tightly sealed, and at the same time followed by introduction of air under pressure as a physical blowing agent to impart an internal pressure. For internal pressure application, the pressure inside the pressure-resistant container (pressurized pressure) was set to 0.12 MPa (G), and the pressurization time was set to 16 hours.

<Fabrication of mixed resin expanded beads molded body>

Using the above-described mixed resin expanded beads, an expanded beads molded body was fabricated. A mold in a state of being open was narrowed, and a flat molding mold of 200 mm length × 65 mm width × 40 mm thickness was filled with the obtained mixed resin expanded beads with the mold slightly open so that cracking was 4 mm (i.e., 10% cracking), and after completion of filling, the mold was completely closed to compress the expanded beads and clamp the mold. Subsequently, in-mold molding was performed by steam heating to obtain a platy expanded beads molded body.
The heating method included supplying steam with drain valves on both sides of the mold open for five seconds to carry out preheating (exhaust step), then supplying steam from a mold on the moving side with a drain valve on the side of a fixing-side mold open, subsequently supplying steam from the fixing-side mold with a drain valve on the side of the mold on the moving side open, then closing an exhaust valve, and heating the mold to a molding heating steam pressure of 0.12 MPa (G) (molding pressure = molding steam pressure). After completion of heating, the pressure was released and the mold was water-cooled until a surface pressure due to the expanding force of the molded body dropped to 0.04 MPa (G), and the mold was then opened and the molded body was removed from the mold. Thereafter, the molded body was left stand in an oven at 80°C and removed after 24 hours to obtain a mixed resin expanded beads molded body. The obtained mixed resin expanded beads molded body was measured and evaluated according to the methods described above. The results are shown in Tables 2 to 4. It is to be noted that the expanded beads molded bodies of Comparative Examples 4 to 6 were not excellent in secondary expandability and poor in fusion splicing properties, so that the water-cooling time and molding cycle were not evaluated.

Example 3

Polyamide-based resin beads, polyamide-based resin expanded beads, and a polyamide-based resin expanded beads molded body were obtained in the same manner as in Example 1, except that the polyamide-based resin A1 was changed to the polyamide-based resin A2, and the holding temperature and expanding temperature were set to (melting point of resin beads - 61)°C. The measurements and evaluations were performed on the obtained polyamide-based resin expanded beads and polyamide-based resin expanded beads molded body. The results are shown in Table 2.

Comparative Examples 1 and 3

Polyamide-based resin beads, polyamide-based resin expanded beads, and polyamide-based resin expanded beads molded bodies were obtained in the same manner as in Example 1, except that the polyamide-based resin B was not used, and only the polyamide-based resin A listed in Table 3 was supplied. The measurements and evaluations were performed on the obtained polyamide-based resin expanded beads and polyamide-based resin expanded beads molded bodies. The results are shown in Table 3.

[Table 2]

Table 2

| | | | | Example | | | | | | | |
|---|---|---|---|---|---|---|---|---|---|---|---|
| | | | | 1 | 2 | 3 | 4 | 5 | 6 | 7 | 8 |
| Resin | Polyamide-based resin A | Type | - | A1 | A1 | A2 | A1 | A1 | A1 | A1 | A1 |
| | | Ratio | % by mass | 90 | 95 | 90 | 90 | 90 | 90 | 85 | 80 |

(continued)

| | | | | Example | | | | | | | |
|---|---|---|---|---|---|---|---|---|---|---|---|
| | | | | 1 | 2 | 3 | 4 | 5 | 6 | 7 | 8 |
| | Polyamide-based resin B | Type | - | B1 | B1 | B1 | B2 | B2 | B3 | B1 | B1 |
| | | Ratio | % by mass | 10 | 5 | 10 | 10 | 10 | 10 | 15 | 20 |
| | Nucleating agent | Talc | ppm | 3000 | 3000 | 3000 | 3000 | 3000 | 3000 | 3000 | 3000 |
| | Colorant | Carbon black | % by mass | 2.5 | 2.5 | 2.5 | 2.5 | 2.5 | 2.5 | 2.5 | 2.5 |
| Resin beads | Melting point | | °C | 186 | 186 | 197 | 186 | 186 | 186 | 186 | 186 |
| Expanded beads | First DSC curve | Apex temperature of peak inherent to polyamide-based resin A | °C | 181 | 181 | 192 | 181 | 182 | 180 | 181 | 181 |
| | | Enthalpy of fusion inherent to polyamide-based resin A | J/g | 33.4 | 41.7 | 34.3 | 36.9 | 38.1 | 34.4 | 32.0 | 35.3 |
| | | Apex temperature of high-temperature peak | °C | 199 | 201 | 209 | 201 | 201 | 201 | 201 | 200 |
| | | Enthalpy of fusion of high-temperature peak | J/g | 4.5 | 4.6 | 5.9 | 3.7 | 4.6 | 3.6 | 3.5 | 3.3 |
| | | Apex temperature of peak inherent to polyamide-based resin B | °C | 235 | 236 | 235 | 236 | 236 | 235 | 236 | 236 |
| | | Enthalpy of fusion inherent to polyamide-based resin B | J/g | 4.8 | 2.7 | 4.0 | 4.9 | 4.7 | 4.3 | 7.7 | 10.7 |
| | Second DSC curve | Apex temperature (TmA) of peak of polyamide-based resin A | °C | 186 | 186 | 197 | 186 | 186 | 186 | 186 | 186 |

(continued)

|  |  |  |  | Example | | | | | | | |
|---|---|---|---|---|---|---|---|---|---|---|---|
|  |  |  |  | 1 | 2 | 3 | 4 | 5 | 6 | 7 | 8 |
|  |  | Apex temperature (TmB) of peak of polyamide-based resin B | °C | 236 | 236 | 236 | 236 | 236 | 236 | 236 | 236 |
|  |  | Melting point difference (TmB - TmA) | °C | 50 | 50 | 39 | 50 | 50 | 50 | 50 | 50 |
|  | Apparent density | | kg/m³ | 130 | 125 | 115 | 130 | 160 | 130 | 150 | 190 |
|  | Average foam cell size | | μm | 110 | 115 | 140 | 115 | 120 | 120 | 110 | 120 |
|  | Closed cell ratio | | % | 94 | 95 | 95 | 95 | 97 | 94 | 96 | 95 |
| Molded body | Molded body density | | kg/m³ | 95 | 80 | 75 | 90 | 105 | 95 | 125 | 150 |
|  | Evaluation | Shrinkage rate | % | 3.8 | 3.8 | 4.6 | 4.6 | 4.6 | 4.6 | 5.4 | 5.4 |
|  |  | Water cooling time | Seconds | 25 | 30 | 20 | 30 | 20 | 20 | 20 | 10 |
|  |  | Molding cycle | Seconds | 80 | 85 | 75 | 85 | 75 | 75 | 75 | 65 |
|  |  | Fusion ratio | % | 100 | 100 | 100 | 100 | 100 | 100 | 100 | 100 |
|  |  | Resiliency | - | A | A | A | A | A | A | A | A |
|  |  | Crystallite size | nm | 9.4 | 10.8 | 10.5 | 10.0 | 9.3 | 10.1 | 8.7 | 4.5 |

[Table 3]

Table 3

|  |  |  |  | Comparative Example | | | | | |
|---|---|---|---|---|---|---|---|---|---|
|  |  |  |  | 1 | 2 | 3 | 4 | 5 | 6 |
| Resin | Polyamide-based resin A | Type | - | A1 | A1 | A2 | A1 | A1 | A1 |
|  |  | Ratio | % by mass | 100 | 99 | 100 | 90 | 90 | 50 |
|  | Polyamide-based resin B | Type | - | - | B1 | - | B4 | B5 | B1 |
|  |  | Ratio | % by mass | 0 | 1 | 0 | 10 | 10 | 50 |
|  | Nucleating agent | Talc | ppm | 3000 | 3000 | 3000 | 3000 | 3000 | 3000 |
|  | Colorant | Carbon black | % by mass | 2.5 | 2.5 | 2.5 | 2.5 | 2.5 | 2.5 |
| Resin beads | Melting point | | °C | 186 | 186 | 197 | 186 | 186 | 186 |

(continued)

| | | | | Comparative Example | | | | | |
|---|---|---|---|---|---|---|---|---|---|
| | | | | 1 | 2 | 3 | 4 | 5 | 6 |
| Expanded beads | First DSC curve | Apex temperature of peak inherent to polyamide-based resin A | °C | 181 | 181 | 192 | 181 | 183 | 180 |
| | | Enthalpy of fusion inherent to polyamide-based resin A | J/g | 37.5 | 40.8 | 49.7 | 61.2 | 26.0 | 21.8 |
| | | Apex temperature of high-temperature peak | °C | 201 | 200 | 209 | 217 | 200 | 200 |
| | | Enthalpy of fusion of high-temperature peak | J/g | 6.4 | 6.6 | 120 | 15.7 | 1.7 | 2.0 |
| | | Apex temperature of peak inherent to polyamide-based resin B | °C | - | 236 | - | - | - | 236 |
| | | Enthalpy of fusion inherent to polyamide-based resin B | J/g | - | 0.5 | - | 0 | 0 | 25.1 |
| | Second DSC curve | Apex temperature (TmA) of peak of polyamide-based resin A | °C | 186 | 186 | 197 | 186 | 186 | 186 |
| | | Apex temperature (TmB) of peak of polyamide-based resin B | °C | - | 236 | - | - | - | 236 |
| | | Melting point difference (TmB - TmA) | °C | - | 50 | - | - | - | 50 |
| | Apparent density | | kg/m³ | 130 | 115 | 130 | 130 | 265 | 750 |
| | Average foam cell size | | μm | 110 | 105 | 100 | 150 | 55 | 40 |

**EP 4 563 632 A1**

(continued)

|  |  |  |  | Comparative Example | | | | | |
|---|---|---|---|---|---|---|---|---|---|
|  |  |  |  | 1 | 2 | 3 | 4 | 5 | 6 |
| Molded body | Closed cell ratio | | % | 95 | 97 | 96 | 94 | 93 | 40 |
|  | Molded body density | | kg/m³ | 90 | 70 | 95 | 95 | - | 680 |
|  | Evaluation | Shrinkage rate | % | 3.8 | 3.8 | 3.8 | 3.8 | 10 | 15 |
|  |  | Water cooling time | Seconds | 45 | 45 | 40 | Not evaluated | Not evaluated | Not evaluated |
|  |  | Molding cycle | Seconds | 100 | 100 | 95 | Not evaluated | Not evaluated | Not evaluated |
|  |  | Fusion ratio | % | 100 | 100 | 100 | 60 | 50 | 0 |
|  |  | Resiliency | - | A | A | A | A | A | C |
|  |  | Crystallite size | nm | 11.2 | 11.0 | 11.0 | - | - | - |

[Table 4]

Table 4

|  |  |  |  | Example | Comparative Example |
|---|---|---|---|---|---|
|  |  |  |  | 9 | 7 |
| Resin | Polyamide-based resin A | Type | - | A1 | A1 |
|  |  | Ratio | % by mass | 90 | 100 |
|  | Polyamide-based resin B | Type | - | B1 | - |
|  |  | Ratio | % by mass | 10 | 0 |
|  | Nucleating agent | Talc | ppm | 3000 | 3000 |
|  | Colorant | Carbon black | % by mass | 0 | 0 |
| Resin beads | Melting point | | °C | 186 | 186 |

(continued)

| | | | | Example | Comparative Example |
|---|---|---|---|---|---|
| | | | | 9 | 7 |
| Expanded beads | First DSC curve | Apex temperature of peak inherent to polyamide-based resin A | °C | 182 | 181 |
| | | Enthalpy of fusion inherent to polyamide-based resin A | J/g | 28.3 | 37.0 |
| | | Apex temperature of high-temperature peak | °C | 201 | 201 |
| | | Enthalpy of fusion of high-temperature peak | J/g | 2.9 | 6.4 |
| | | Apex temperature of peak inherent to polyamide-based resin B | °C | 236 | - |
| | | Enthalpy of fusion inherent to polyamide-based resin B | J/g | 15.3 | - |
| | Second DSC curve | Apex temperature (TmA) of peak of polyamide-based resin A | °C | 186 | 186 |
| | | Apex temperature (TmB) of peak of polyamide-based resin B | °C | 236 | - |
| | | Melting point difference (TmB - TmA) | °C | 50 | - |
| | Apparent density | | kg/m$^3$ | 130 | 125 |
| | Average foam cell size | | μm | 110 | 120 |
| | Closed cell ratio | | % | 95 | 96 |
| Molded body | Molded body density | | kg/m$^3$ | 90 | 80 |
| | Evaluation | Shrinkage rate | % | 3.8 | 3.8 |
| | | Water cooling time | Seconds | 55 | 60 |
| | | Molding cycle | Seconds | 110 | 115 |
| | | Fusion ratio | % | 100 | 100 |
| | | Resiliency | - | A | A |
| | | Crystallite size | nm | 9.4 | 10.5 |

From Tables 2 to 4, the expanded beads obtained in Examples are accordingly found to shorten the molding cycle upon in-mold molding, inhibit the shrinkage after molding, and provide the expanded beads molded bodies excellent in fusion splicing properties as well.

Industrial Applicability

The polyamide-based resin expanded beads of the present invention shorten the molding cycle upon in-mold molding, inhibits the shrinkage after molding, and provides the expanded beads molded bodies excellent in fusion splicing properties as well and are therefore expected to be applied for further use such as automobile parts and electrical products.

**Claims**

1. Polyamide-based resin expanded beads having a mixed resin of a polyamide-based resin A and a polyamide-based resin B as a base resin,

wherein the polyamide-based resin A is an aliphatic polyamide,

the polyamide-based resin B is a xylylene group-containing polyamide-based resin, and
a mass ratio between the polyamide-based resin A and the polyamide-based resin B (polyamide-based resin A:polyamide-based resin B) is 97:3 to 60:40.

2. The polyamide-based resin expanded beads according to claim 1, wherein a melt flow rate of the polyamide-based resin B at 275°C under a load of 0.325 kg is 5 g/10 minutes or less.

3. The polyamide-based resin expanded beads according to claim 1 or 2, wherein the expanded beads comprise carbon black.

4. The polyamide-based resin expanded beads according to any one of claims 1 to 3, wherein a melting point (TmA) of the polyamide-based resin A is higher than 180°C and 250°C or lower.

5. The polyamide-based resin expanded beads according to any one of claims 1 to 4, wherein a difference (TmB - TmA) between a melting point (TmA) of the polyamide-based resin A and a melting point (TmB) of the polyamide-based resin B is 30°C or more and 100°C or less.

6. The polyamide-based resin expanded beads according to any one of claims 1 to 5, wherein an apparent density of the expanded beads is 10 kg/m$^3$ or more and 300 kg/m$^3$ or less.

7. The polyamide-based resin expanded beads according to any one of claims 1 to 6, wherein a closed cell ratio of the expanded beads is 70% or more.

8. A polyamide-based resin expanded beads molded body obtained by in-mold molding the polyamide-based resin expanded beads according to any one of claims 1 to 7.

[Fig. 1]

## INTERNATIONAL SEARCH REPORT

| | International application No. |
|---|---|
| | **PCT/JP2023/026977** |

| A. | CLASSIFICATION OF SUBJECT MATTER |
|---|---|

*C08J 9/16*(2006.01)i; *C08L 77/00*(2006.01)i
FI: C08J9/16 CFG; C08L77/00

According to International Patent Classification (IPC) or to both national classification and IPC

| B. | FIELDS SEARCHED |
|---|---|

Minimum documentation searched (classification system followed by classification symbols)

C08J9/16; C08L77/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2020/196893 A1 (ASAHI KASEI KABUSHIKI KAISHA) 01 October 2020 (2020-10-01) claims, paragraphs [0118]-[0153], examples 13-15, table 2 | 1-8 |
| A | WO 2017/115685 A1 (MITSUBISHI GAS CHEMICAL CO) 06 July 2017 (2017-07-06) | 1-8 |
| A | JP 2011-57977 A (MITSUBISHI ENGINEERING PLASTICS CORP) 24 March 2011 (2011-03-24) | 1-8 |
| A | JP 2009-1782 A (MITSUBISHI GAS CHEMICAL CO) 08 January 2009 (2009-01-08) | 1-8 |

☐ Further documents are listed in the continuation of Box C.　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 October 2023** | **24 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/026977**

| Patent document cited in search report | | | Publication date (day/month/year) | Patent family member(s) | | | Publication date (day/month/year) |
|---|---|---|---|---|---|---|---|
| WO | 2020/196893 | A1 | 01 October 2020 | US | 2022/0169849 | A1 | |
| | | | | EP | 3950794 | A1 | |
| | | | | CN | 113614158 | A | |
| WO | 2017/115685 | A1 | 06 July 2017 | US | 2019/0010328 | A1 | |
| | | | | EP | 3398995 | A1 | |
| | | | | CN | 108137923 | A | |
| | | | | KR | 10-2018-0099633 | A | |
| JP | 2011-57977 | A | 24 March 2011 | (Family: none) | | | |
| JP | 2009-1782 | A | 08 January 2009 | US | 2008/0293887 | A1 | |
| | | | | EP | 2014717 | A2 | |
| | | | | CN | 101311213 | A | |
| | | | | KR | 10-2008-0102971 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016147582 A